# EUROPEAN PATENT APPLICATION

(11) **EP 2 546 789 A1**
(43) Date of publication of application: **16.01.2013**
(21) Application number: 11193745.4
(22) Date of filing: 15.12.2011
(51) Int. Cl.: G06Q 10/06

(54) **Method and system for distributed and collaborative monitoring**

(30) Priority: 15.07.2011 US 201113184015
(71) Applicant: Khalifa University of Science, Technology and Research, Abu Dhabi (AE); British Telecommunications PLC, London EC1A 7AJ (GB); Emirates Telecommunications Corporation, Abu-Dhabi (AE)
(72) Inventor: Majeed, Basim, Abu Dhabi (AE); Du, Xiaofeng, Ipswich, IP5 3RE (GB); Bordbar, Behzad, Birmingham, B15 2TT (GB)
(74) Representative: Hodsdon, Stephen James

(57) **Abstract**

A system is provided for monitoring the performance of a service within a business process environment is provided, the system including, locally to said service and preferably for each service: an information collector collecting information about the performance of said service in real-time; a database storing information about the performance of said service over time; and a control unit processing the information collected by said information collector and determining information to be stored in said database. A method of distributed monitoring of the performance of services within a business process environment is also provided. Further aspects provide a system and method for assisting in the design of a business process which determines whether services intended to be included in that process meet a performance criterion and a system and method for monitoring the performance of a plurality of services in a business process environment which determines whether a service which is intended to be used in a business process meets a performance criterion.

## Description

### Field of the Invention

The present invention relates to a method and system for distributed and collaborative monitoring.

### Background of the Invention

There is a desire amongst developers and providers of IT systems to deliver a Service Oriented Architecture (SOA) which is a flexible set of design principles used in systems development and integration with the aim of providing interoperable functionality that can be used within separate systems from a plurality of business domains.

A key component in an SOA is the partitioning of the IT functionality required by an enterprise into a set of cooperating platforms each of which covers a defined subset of the overall IT functionality, masters key data and comprises key systems. This division of tasks enables people to focus on a defined area which is manageable in terms of design and delivery, in order to provide an infrastructure for transformation from haphazardly connected legacy systems to coherent reusable services. Such multiplatform architecture makes the availability of robust monitoring functionality for performance, compliance and risk very important.

Due to the user intensive nature of such services and the complex interactions between them, it is important to create monitoring services in order to oversee the overall quality and performance of the system. Providing such services will allow an enterprise to ensure satisfaction of its customers, hit service level agreement targets and ensure compliance with regulations.

Currently, the only available architecture for monitoring the SOA business process environment is centralised monitoring, in which all such monitoring services are located on one dedicated platform. This architecture is easy to implement but it has a number of shortcomings such as lack of reliability, single point of failure, limited view of the environment and the difficulty of implementing comprehensive risk analysis and prediction.

It is an object of the present invention to provide a method and system for monitoring which addresses the above shortcomings.

Two papers (Wang, Y., T. Kelly, and S. Lafortune: Discrete control for safe execution of IT automation workflows, EuroSys. 2007 and Yan, Y., Y. Pencole, M.-O. Cordier, and A. Grastien: Monitoring and Diagnosing Orchestrated Web Service Processes ICWS07 July 9-13, 2007 USA) discuss the use of discrete event system (DES) techniques and model based transformation to carry out a complex transformation between a Business Process Execution Language (BPEL) model and a DES model, design a process diagnoser in DES then transform the diagnoser back to BPEL. The only monitoring tasks that such a diagnoser can perform are those which are known beforehand, and it can only detect problems that have occurred (i.e. it is unable to predict future performance). Furthermore, because each diagnoser is process-specific, each individual process that uses a service will require a diagnoser of this type.

### Summary of the Invention

At its broadest, a first aspect of the present invention provides a method of monitoring services which is distributed.

A first aspect of the present invention preferably provides a method of monitoring the performance of services within a business process environment, the method including the steps of, for each of a plurality of services within said environment, locally to said service: monitoring the performance of said service in real time; and storing a history of events in the performance of said service.

By "in real time", it is meant that the monitoring occurs on an ongoing basis during the operation of the service such that it is possible, if desired, to know the performance of the service at at least a very recent point in time (as well as any historical point(s) in time that may have been recorded). However, it will be appreciated by the skilled person that delays in the obtaining of information, determining performance characteristics from that information and saving or passing on such information or characteristics will mean that the monitoring may not actually reflect the performance of the service at the exact moment in time that such information is available for use. Accordingly, if appropriate, "in real time" can be taken therefore to mean "substantially in real time".

By monitoring tasks by service and not by the processes which use those services, if there are problems in a specific service then all processes that use the service will receive the diagnostics (or predictions) without having to deploy a diagnoser for each individual process.

The method of monitoring according to the first aspect provides a finer grained method of monitoring than has previously been proposed. The monitoring method of this aspect monitors the business process at the service level so that the collected service monitoring information can be used to prevent failure or recover from failure in all relevant business processes. It is particularly useful when business processes share common services.

In preferred embodiments, each of said plurality of services is separately monitored. However, in certain embodiments, a plurality of services running on a particular system (e.g. a hardware and software environment in which a service is run) may be monitored together. Such combined monitoring may be in effect conducted separately such that the monitoring of each service is done in parallel without effect on the monitoring of the other service(s), or may be done collectively.

The monitoring may be on a regular or periodic basis, or may be event-driven (for example through use of the service by a consumer of the service).

In a preferred arrangement, the step of monitoring includes monitoring the message traffic between said service and its consumers, preferably the entirety of such message traffic. This allows characteristics and performance data about the service to be determined on an ongoing basis without placing additional demands on the service itself.

In alternative arrangements the step of monitoring includes sending test messages to the monitored service on a periodic basis to determine the performance of the service.

The monitoring according to the method of this aspect may therefore be ad-hoc rather than intrusive. In particular the monitoring according to the method of this aspect does not require modifying the monitored service's hosting system (which most systems will not allow an external application to do).

The method may further include the step of, on request from a central agent, passing information as to the monitored service's historical performance, current performance or predicted future performance or both to said central agent.

This allows a central agent to obtain, on demand, information as to the historical performance, current performance or predicted future performance from one or more services.

In particular the method may further include the steps of: receiving from said central agent at least one criterion for the performance of the service; analysing, using the stored history of events, whether the performance of the service meets said criterion; and reporting the result of said step of analysing to said central agent.

Thus the method allows the performance of each service to be monitored or measured against one or more performance criteria on an ongoing basis.

The criterion received may be received at the same time as the request or at an earlier time as part of the set up of the monitoring process.

At its broadest, a second aspect of the present invention provides a method of designing a business process which makes use of real-time service status information or historical service performance information to determine whether a service should be included in the business process.

Accordingly, a second aspect of the present invention preferably provides a method of designing a business process which uses one or more services within a business process environment, the method including the steps of, when a service is chosen to be included in said business process: specifying at least one criterion for the performance of said service; retrieving service status information in real-time about said service, retrieving historical performance information for said service or predicting future performance characteristics of said service; comparing said service status information or historical performance information or future performance characteristics or any combination of these to said criterion; and determining, on the basis of said comparison, whether to include said service in said business process.

As the process monitoring of this aspect is carried out at the service level, a process's failure or underperformance can be predicted at design time so that more reliable business processes can be created.

Preferably, if it is determined not to include said chosen service in said business process, the method includes the further step of suggesting an alternative service to said chosen service. In this manner the designer of the business process can determine the best service(s) to use in that process.

The criterion may be specified by the designer of the business process or may be a standard criterion applied to all services within the business process environment. There may be a plurality of criteria against which the performance of the service is compared and on the basis of which comparisons a decision is made about whether to include the service in the business process under design.

A criterion specified by the designer allows the designer to require specific levels of historical performance, current performance or predicted future performance before including a service in the process under design. This allows a designer to impose stricter requirements for particular process (e.g. more critical processes) than for other processes.

Comparison to one or more standard criteria allows the designer to choose those services which are operating (or have operated or are predicted to operate) to a standard level of performance and to avoid using those processes which do not meet such criteria.

Preferably the step of retrieving service status information in real-time about said service, retrieving historical performance information for said service or predicting future performance characteristics of said service makes use of a method of monitoring according to the above first aspect, or the results of such a method. In particular the step of retrieving in the present aspect may be viewed as the operations of the central agent referred to in the above first aspect.

At its broadest, a third aspect of the present invention provides a method of executing a business process which is able to determine, in real time, problems or potential problems with a service in that process.

Accordingly, a third aspect of the present invention preferably provides a method of executing a business process which uses one or more services within a business process environment, the method including the steps of, for at least one of said services: retrieving real-time service status information or predicted service performance information about a service which is scheduled to be used by the business process, in advance of the use of that service; and determining, on the basis of said information, whether there are any problems or potential problems with the use of said service.

As the process monitoring is at service level, a process's failure can be prevented as faulty or underperforming services can be spotted before their invocations.

Preferably the method further includes the steps of, if a problem or potential problem is determined: determining if an alternative service exists which could replace the service in which a problem or potential problem is determined; and if an alternative service exists, adjusting said business process to use said alternative service rather than the service that was scheduled to be used by said business process.

By providing an alternative service, the process can continue to be executed without reliance on a faulty or underperforming service.

If no alternative service exists, the method may also include the step of recording the results of said determinations in an event log. This can allow a review of the overall service provision to determine whether alternative or additional services should be provided in order to meet service demands, or where service performance needs to be improved to meet demands.

Compared to a centralised monitoring mechanism, the methods of the above aspects are designed in a distributed fashion. Accordingly, the failure of monitoring relating to one service will not affect the monitoring of other services. The data gathered by the monitoring methods can also be stored in a distributed fashion so that there is no centralised data warehouse.

Similarly as the methods of the above aspects provide finer grained methods for business process monitoring at the service level, the monitoring information obtained can be shared between different processes. This has the advantage that it can solve the problems that process level monitoring mechanism cannot solve. For example, in service level monitoring, if one service participates in many business processes, e.g. a customer billing service or a user authentication service, then once this service fails, all the processes containing this service can be notified. However, if the monitoring is at process level, then a process's failure may not be useful to predicate other processes' failures if they do not depend on each other or have a number of different services in common.

At its broadest, a fourth aspect of the present invention provides a monitoring system which provides local monitoring of a service within a business process environment.

Accordingly, a fourth aspect of the present invention preferably provides a system for monitoring the performance of a service within a business process environment, the system including, locally to said service: an information collector collecting information about the performance of said service in real-time; a database storing information about the performance of said service over time; and a processor processing the information collected by said information collector and determining information to be stored in said database.

By providing a system which monitors the performance of an individual service (and a plurality of such systems may be provided within the same business process environment), rather than a system which monitors the processes which use those services, if there are problems in a specific service then the system can communicate diagnostics (or predictions) for the service to all processes that use the service without having to deploy a diagnoser for each individual process.

Thus the system according to this fourth aspect allows finer grained monitoring within a business process environment than has previously been proposed. The system of this aspect monitors at the service level so that the collected service monitoring information can be used to prevent failure or recover from failure in all relevant business processes. It is particularly useful when business processes share common services.

In preferred embodiments, the system monitors the performance of a single service and a separate system is provided to monitor each of a plurality of services typically found in the business process environment. However, in certain embodiments, the system may monitor a plurality of services running on a particular system (e.g. a hardware and software environment in which a service is run). In such cases the system may monitor the services effectively separately such that the monitoring of each service is done in parallel without effect on the monitoring of the other service(s), or the monitoring may be done collectively.

As indicated above, there may be a plurality of such systems within the business process environment and a further aspect of the present invention provides a business process environment in which there are a plurality of services which are used in business processes, and wherein each service of said plurality of services (although not necessarily all services within the business process environment) has a system according to the above fourth aspect.

The information collector may collect information about the service on a regular or periodic basis, or may be event-driven (for example through use of the service by a consumer of the service).

In a preferred arrangement, the information collector monitors the message traffic between said service and its consumers, preferably the entirety of such message traffic. This allows characteristics and performance data about the service to be determined on an ongoing basis without placing additional demands on the service itself.

In alternative arrangements the information collector sends test messages to the monitored service on a periodic basis to determine the performance of the service.

The monitoring performed by the system of this aspect may therefore be ad-hoc rather than intrusive. In particular the monitoring performed by the system of this aspect does not require modifying the monitored service's hosting system (which most systems will not allow an external application to do).

The processor of the system may receive a request from a central agent and pass information as to the monitored service's current performance, historical performance or predicted future performance or any combination thereof to said central agent.

This allows the system to provide, to a central agent, on demand, information as to the historical performance, current performance or predicted future performance from the monitored service.

Preferably in such an arrangement the processor receives at least one criterion for the performance of the service, analyses, using information from said database whether the performance of the service meets said criterion and reports the results of said analysis to the central agent.

Thus the system can measure the performance of the service against one or more performance criteria on an ongoing basis.

The criterion received may be received at the same time as the request or at an earlier time as part of the set up of the monitoring process.

At its broadest, a fifth aspect of the present invention provides a system for providing a service within a business process environment which also monitors the performance of said service locally.

Accordingly, a fifth aspect of the present invention preferably provides a system for providing a service within a business process environment, the system including: a memory storing a program which, when executed, provides said service; a processor on which said program is executed; an information collector collecting information about the performance of said service in real-time; a database storing information about the performance of said service over time; and a control unit processing the information collected by said information collector and determining information to be stored in said database.

By providing a system which both provides the service to the business process environment and which monitors that service, the monitoring can be carried out locally to the service, i.e. within the same hardware and/or software environment that the service is running on. This allows the monitoring of each service within the business process environment to be distributed to the part of the environment where the service is being provided.

In certain arrangements, the control unit may be a processor (which may be the processor of the system or another processor within said system) executing a program which processes the information. Similarly the information collector may be a further program which, when executed on said processor (or on another processor within said system) collects the information about the service.

A system according to this aspect may provide a plurality of services to the business process environment. In such circumstances a plurality of programs may be stored in the memory (or in further memories) which, when executed on said processor each provide a respective one of said plurality of services.

In a preferred embodiment of the system providing a plurality of services, an information collector, database and control unit are provided for each of said services so that the services can be individually monitored.

In alternative embodiments the information collector, database or control unit (or any combination thereof) may respectively collect, store and/or process information about the performance of a plurality of said services. In such an embodiment, the resources of the information collector, database and/or control unit can be shared between the services being provided by the system, but the monitoring can still be conducted locally, i.e. within the system which is providing the service, rather than centrally/remotely.

At its broadest, a sixth aspect of the present invention provides a system for assisting in the design of a business process which determines whether services intended to be included in that process meet a performance criterion.

Accordingly, a sixth aspect of the present invention preferably provides a system for monitoring the performance of a plurality of services within a business process environment, the system including: a plurality of monitors, each monitoring the performance of one of said plurality of services in real-time; a coordinator communicatively coupled to each of said monitors; and a process design unit which may be invoked by a designer of a business process which uses at least one of said plurality of services, wherein: for each service chosen to be included in said business process, the process design unit sends a request to said coordinator to determine whether said service meets at least one criterion for the performance of said service; the coordinator determines the monitor which monitors the performance of said service and passes the criterion to said monitor; and said monitor determines whether said service meets said criterion and reports the outcome of said determination to said coordinator, which responds to said request from the process design unit.

As the system has a plurality of monitors, each monitoring the performance of one of the plurality of services, the monitoring of the system of this aspect is carried out at the service level, a process's failure or underperformance can be predicted at design time so that more reliable business processes can be created.

Preferably if the response from the coordinator is negative, the process design unit determines if an alternative service to said service is available within the business process environment, and if an alternative service is available, proposes said alternative service to the designer of said business process.

The criterion may be specified by the designer of the business process or may be a standard criterion applied to all services within the business process environment. There may be a plurality of criteria against which the performance of the service is compared and on the basis of which comparisons a decision is made about whether to include the service in the business process under design.

A criterion specified by the designer allows the designer to require specific levels of historical performance, current performance or predicted future performance before including a service in the process under design. This allows a designer to impose stricter requirements for particular process (e.g. more critical processes) than for other processes.

Comparison to one or more standard criteria allows the designer to choose those services which are operating (or have operated or are predicted to operate) to a standard level of performance and to avoid using those processes which do not meet such criteria.

Preferably one or more monitors of the present aspect are a system or systems according to the above fourth aspect.

At its broadest, a seventh aspect of the present invention provides a system for monitoring the performance of a plurality of services in a business process environment which determines whether a service which is intended to be used in a business process meets a performance criterion.

Accordingly, a seventh aspect of the present invention preferably provides a system for monitoring the performance of a plurality of services within a business process environment, the system including: a plurality of monitors, each monitoring the performance of one of said plurality of services in real-time; a coordinator communicatively coupled to each of said monitors; and a process monitor monitoring the execution of a business process which uses at least one of said plurality of services, wherein: for each service in said business process, the process monitor sends a request to said coordinator to determine whether said service meets at least one criterion for the performance of said service in advance of said business process using said service; the coordinator determines the monitor which monitors the performance of said service and passes the criterion to said monitor; and said monitor determines whether said service meets said criterion and reports the outcome of said determination to said coordinator, which responds to said request from the process monitor.

As the system has a plurality of monitors monitoring individual services, a process's failure can be prevented as faulty or underperforming services can be spotted before their invocations.

Preferably if the response from the coordinator is negative, the process monitor determines if an alternative service to said service is available within the business process environment, and if an alternative service is available, adjusts said business process to use said alternative service rather than the service that was scheduled to be used by said business process.

By providing an alternative service, the process can continue to be executed without reliance on a faulty or underperforming service.

The system may further include an event log which records the results of said determinations. This event log can allow a review of the overall service provision to determine whether alternative or additional services should be provided in order to meet service demands, or where service performance needs to be improved to meet demands.

Compared to a centralised monitoring mechanism, the systems of the above aspects are designed in a distributed fashion. Accordingly, the failure of monitoring relating to one service will not affect the monitoring of other services. The data gathered by the monitoring system of the fourth aspect can also be stored in a distributed fashion so that there is no centralised data warehouse.

Similarly as the systems of the above aspects provide finer grained methods for business process monitoring at the service level, the monitoring information obtained can be shared between different processes. This has the advantage that it can solve the problems that process level monitoring mechanism cannot solve. For example, in service level monitoring, if one service participates in many business processes, e.g. a customer billing service or a user authentication service, then once this service fails, all the processes containing this service can be notified. However, if the monitoring is at process level, then a process's failure may not be useful to predicate other processes' failures if they do not depend on each other or have a number of different services in common.

Preferably, the business processes referred to in each of the above aspects use Business Process Execution Language (BPEL). This means that it is not necessary to rely on complex and error-prone discrete event (e.g. DES) techniques.

An exemplary method of monitoring the performance of services within a business process environment includes the steps of, for each of a plurality of services within said environment, locally to said service: monitoring the performance of said service in real time; and storing a history of events in the performance of said service.

An exemplary method of designing a business process which uses one or more services within a business process environment, includes the steps of, when a service is chosen to be included in said business process: specifying at least one criterion for the performance of said service; retrieving service status information in real-time about said service, retrieving historical performance information for said service or predicting future performance characteristics of said service; comparing said service status information, historical performance information or future performance characteristics to said criterion; determining, on the basis of said comparison, whether to include said service in said business process; and if it is determined not to include said chosen service in said business process, suggesting an alternative service to said chosen service.

An exemplary method of executing a business process which uses one or more services within a business process environment, includes the steps of, for at least one of said services: retrieving real-time service status information or predicted service performance information about a service which is scheduled to be used by the business process, in advance of the use of that service; determining, on the basis of said service status information, whether there are any problems or potential problems with the use of said service; and, if a problem or potential problem is determined: determining if an alternative service exists which could replace the service in which a problem or potential problem is determined; and if an alternative service exists, adjusting said business process to use said alternative service rather than the service that was scheduled to be used by said business process, or, if no alternative service exists, recording the results of said determinations in an event log.

An exemplary system for monitoring the performance of a service within a business process environment, includes, locally to said service: an information collector collecting information about the performance of said service in real-time; a database storing information about the performance of said service over time; and a control unit processing the information collected by said information collector and determining information to be stored in said database.

An exemplary system for providing a service within a business process environment includes: a memory storing a program which, when executed, provides said service; a processor on which said program is executed; an information collector collecting information about the performance of said service in real-time; a database storing information about the performance of said service over time; and a control unit processing the information collected by said information collector and determining information to be stored in said database.

An exemplary system for monitoring the performance of a plurality of services within a business process environment includes: a plurality of monitors, each monitoring the performance of one of said plurality of services in real-time; a coordinator communicatively coupled to each of said monitors; and a process design unit which may be invoked by a designer of a business process which uses at least one of said plurality of services, wherein: for each service chosen to be included in said business process, the process design unit sends a request to said coordinator to determine whether said service meets at least one criterion for the performance of said service; the coordinator determines the monitor which monitors the performance of said service and passes the criterion to said monitor; said monitor determines whether said service meets said criterion and reports the outcome of said determination to said coordinator, which responds to said request from the process design unit.

An exemplary system for monitoring the performance of a plurality of services within a business process environment includes: a plurality of monitors, each monitoring the performance of one of said plurality of services in real-time; a coordinator communicatively coupled to each of said monitors; and a process monitor monitoring the execution of a business process which uses at least one of said plurality of services, wherein: for each service in said business process, the process monitor sends a request to said coordinator to determine whether said service meets at least one criterion for the performance of said service in advance of said business process using said service; the coordinator determines the monitor which monitors the performance of said service and passes the criterion to said monitor; and said monitor determines whether said service meets said criterion and reports the outcome of said determination to said coordinator, which responds to said request from the process monitor

### Brief Description of the Drawings

Embodiments of the invention will now be described by way of example with reference to the accompanying drawings in which:
Figure 1 shows, in schematic form, an implementation of a service monitor according to an embodiment of the present invention;
Figure 2 shows, in schematic form, an implementation of a process design and execution assistant according to an embodiment of the present invention;
Figure 3 is a flowchart of the operation of an embodiment of the present invention in the BPEL design phase;
Figure 4 is a flowchart of the operation of an embodiment of the present invention in the BPEL execution phase; and
Figure 5 shows the relationships between the four components or phases of operation discussed in relation to the embodiments of the present invention.

### Detailed Description

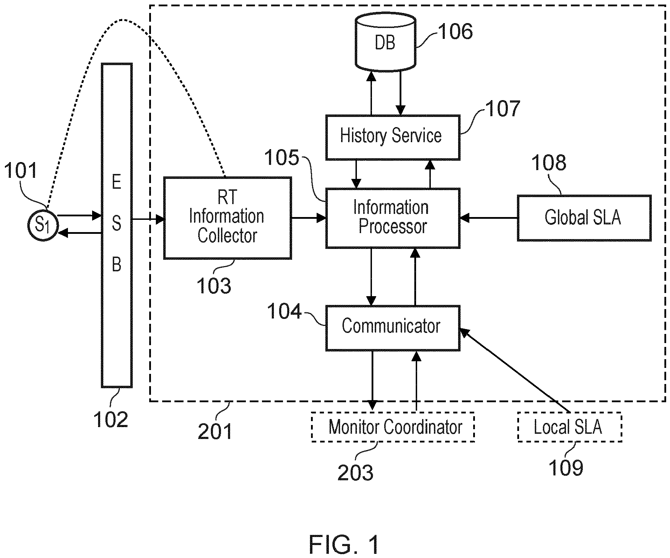

Figure 1 is a schematic illustration of a local service monitor 201 which is a system according to an embodiment of the present invention.

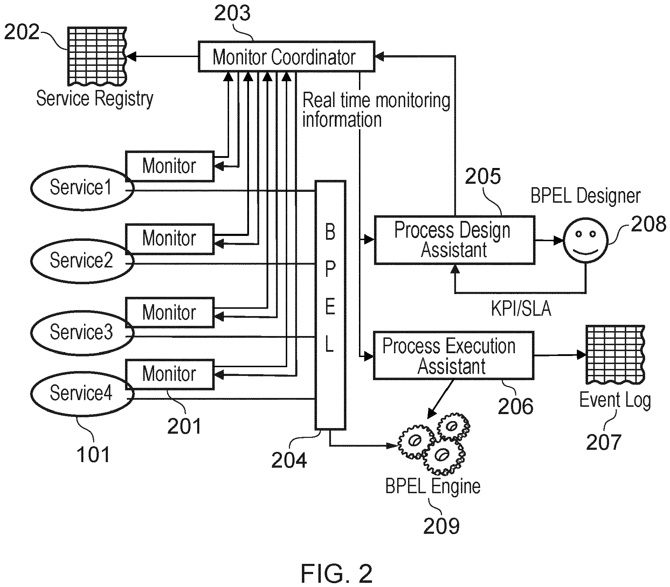

The local service monitor 201 is preferably, as shown in Figure 1, provided for each service in the architecture. However, in the alternative, a single local service monitor 201 can monitor a plurality of services in the architecture. The role of the local service monitor is to collect real-time information about the monitored service(s), analyse and store abnormal events into a history database, and provide detailed monitoring information and prediction if required to the process design assistant 205 and process execution assistant 206 (shown in Figure 2).

The local service monitor 201 of the present exemplary embodiment comprises a real-time (RT) information collector 103, a service performance history database 106, a history service interface 107, an information processor 105, a communicator 104, a global service level agreement (SLA) database 108 and a local SLA database 109.

The real-time information collector 103 is the component that collects the real-time information from a service 101 and reports this information to the information processor 105 for analysis and storing into the history database 106.

The real-time information collector 103 can collect information in two ways. Firstly, if there is an Enterprise Service Bus (ESB) 102 available, e.g. an Oracle Service Bus, the real-time information collector 103 registers itself on all the topics and queues of the ESB 102 so that it can monitor the entire message traffic. This way, the actual communication messages between services and their consumers can be collected. From these messages, the information processor 105 can extract, via real-time data collector 103, several types of information about a service, such as error rate, error type/content of error messages, service availability, and response time.

Secondly if an ESB 102 is not available, the real-time information collector 103 can directly send test single object access protocol (SOAP) messages to the monitored service 101 periodically to examine the availability and response time etc (as shown by the dotted line in Figure 1). The collected real-time monitoring data will then be reported to the information processor 105 for analysis and storing into the history database 106.

The service performance history database 106 stores a history of service performance monitoring. The history data can be reported on demand. When there is a data request from the process design assistant component 205 or process execution assistant component 206 (each described below), the service performance data is retrieved from the database and passed to the information processor 105. The information processor 105 then will process the data according the service level agreement (either the local SLA from database 109, if available or the global SLA from database 108) through a rule engine to examine whether the service's performance is satisfactory and to predict the future performance of the service, such as the possibility of failure, using a predictive algorithm. The result is then passed to the process design assistant 205 or process execution assistant 206 through the communicator 104.

Alternatively, the data in the service performance history database 106 can be queried by any reporting system to analyse service performance and improve service quality accordingly. Such queries are typically processed through the information processor 105 as above, but in some embodiments, the service performance history database 106 may have direct connections to reporting systems such as a global monitor (not shown).

The underlying database system of the service performance history database 106 can be any database system that is supported by Java database connectivity (JDBC), such as an Oracle database.

The history service interface 107 is an interface for storing to and reading data from the service performance history database 106.

The information processor 105 is the core component of the service monitor. It is arranged to analyse the monitoring information passed by the real-time information collector 103 and store important events into the service performance history database 106.

When a java message service (JMS) message from the ESB 102 is received, the information processor extracts a number of types of information from the message about the monitored service 101 and/or calculates performance indicators for the service, such as error rate, error type/content of error messages, service availability, and response time.

For example, the error rate can be calculated using a predefined time window (specified when a monitor is initialised), such as one day, one week or one month. The information processor will then count how many error messages are received during that time window to calculate the error rate.

Similarly, the response time can be calculated using the time difference between a request message being sent and the response message being received back. When a SOAP message is received, the way it is processed by the information processor 105 is very similar to processing JMS messages as discussed above. However, less information will be retrieved under this procedure as the SOAP message is not an actual communication message between the monitored service and its consumer (not shown).

When monitoring information is requested for assisting in process design and execution, the information processor 105 will first contact the history service interface 107 to retrieve the information from the database 106. The information processor 105 then passes the information retrieved together with the real-time information received from the real-time information collector 103 and the local SLA from the database 109 (if it is available) or the global SLA from the database 108 through a rule engine to see whether the service performance is satisfactory. It is also able to predict possible future service behaviours based on the service performance history and the SLA retrieved.

The communicator 104 is a communication interface for passing information in and out of the monitor 201. The communicator 104 might implement, for example, a communication link based on TCP/IP, Java RMI, or JMS etc. for communication with a monitor coordinator 203.

The global SLA database 108 stores a set of minimum service level agreements (SLAs) that have to be satisfied before a service can participate in any business process. The global SLA and therefore the contents of the global SLA database 108 are specified when the monitor is created. A global SLA can be, for example, that the service availability must be more than 99%. As it is a global SLA, if the service availability is less than 99%, then the service cannot be used in any business process.

The local SLA database 109 stores a set of service level agreements (SLAs) or key performance indicators (KPls) that are submitted by a process design assistant (PDA) 205 (described below with reference to Figure 2) during process design time or by a process execution assistant (PEA) 206 (also described below with reference to Figure 2) during process execution time. The local SLAs are not part of the monitor implementation, as they are only passed to the monitor when service performance information is required. If the requirements of a local SLA are higher than those of the applicable global SLA, the global SLA will be overridden. A local SLA is usually more restrictive. For example, for a particular business process, a local SLA could be that the service availability must be more than 99.9%, the error rate must be less than 1%, and response speed must be less than 10 seconds.

Figure 2 is a schematic illustration of a combined process design and execution assistant which is a system according to an embodiment of the present invention.

The process design and execution assistant is arranged to collect information from relevant service monitors and to utilise this information during the process design and execution phases. It contains two sub-components: the process design assistant 205 and the process execution assistant 206.

The process design assistant (PDA) 205 is designed as a JDeveloper(TM) plug-in. JDevelopment is an Oracle(TM) development tool, but other tools can also be used as the PDA. The PDA is arranged to gather service information on demand when a process designer 208 designs a BPEL process. When a service is chosen to be included in a BPEL process 204, the PDA 205 will contact the relevant service monitor 201 to get the real-time service status information and compare with the SLAs/KPIs specified by the process designers to see whether that service 101 meets the criteria of the developers and is in good condition. Accordingly, it helps process designers to avoid including low performance, unstable, or faulty services into new business processes.

The process execution assistant (PEA) 206 is designed as a BPEL execution engine plug-in. When a BPEL process 204 is executed, the PEA 206 collects the real-time status information about all the services 101 participating in the BPEL process 204 from relevant service monitors 201. It can identify faulty services even before those services are invoked in the process, so that the BPEL execution engine 209 can arrange alternative services rather than execute the faulty ones.

The process design and execution assistant also comprises a service registry 202, a monitor coordinator 203, an event log 207 and a BPEL engine 209.

The service registry 202 holds the communication information for the registered service monitors 201. The communication information can be an URL or an IP address to uniquely identify a monitor. The service registry is a mapping table from services 101 to their related monitors 201 and the monitors' communication information.

The monitor coordinator 203 is arranged to collect service information on demand from the various monitors 201 during process design and execution. The communication between the monitor coordinator 203 and the service monitors 201 can be based on TCP/IP, Java RMI, or JMS etc.

The event log 207 records abnormal events, such as service failure during process execution. The event log 207 can be implemented as a database file or more simply as a text file.

The BPEL engine 209 is a system that can load BPEL processes, execute them, and deliver results. In different embodiments of the present invention, the BPEL engine can be any BPEL engine that known and is available on the market, such as Oracle BPEL Process Manager or the Apache ODE.

Figure 2 illustrates how the process design and execution assistant component and its sub-components communicate with service monitors 201 to assist in the design and execution of BPEL processes. The PDA 205 and the PEA 206 do not directly communicate with individual service monitors 201, but do so through the monitor coordinator 203. The monitor coordinator 203 maintains a dynamic service registration table as part of the service registry 202 that records the up-to-date information regarding which service is monitored by which local service monitor 201. Thus the monitor coordinator 203 is capable of collecting real-time service status information and failure predictions from all the available service monitors 201.

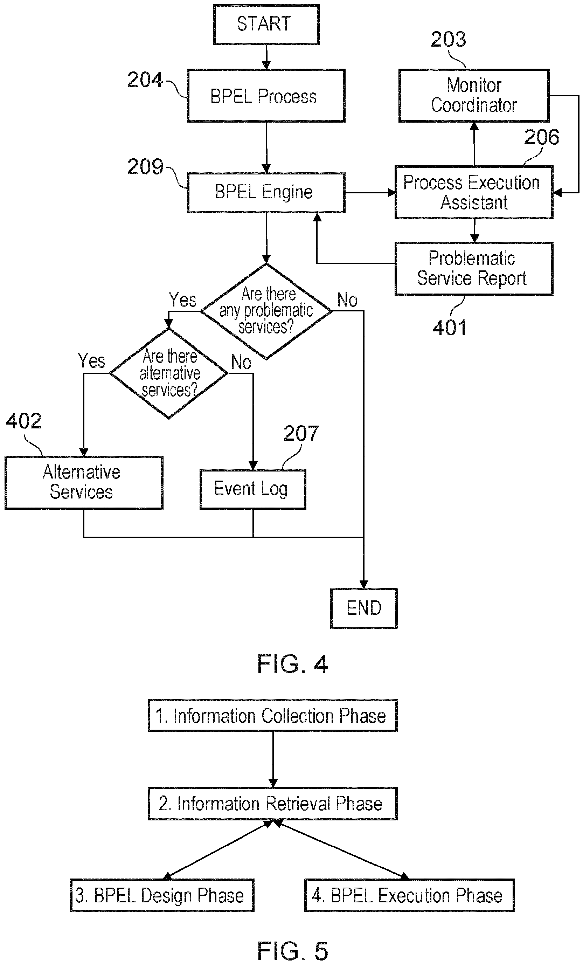

Next methods according to embodiments of the present invention will be described. In particular, methods of information collection, information retrieval, BPEL design and BPEL execution will be described. Figure 5 shows the relationship between these various methods or phases of operation.

To illustrate the methods of these embodiments, the example of a directory service will be used. The directory service is widely used in many business processes. The function of the service is to provide detailed information about a customer or an employee when a name or an EIN (Employee Identification Number) is provided. We assume Si is the primary directory service and its alternative service is *S*2, which provides the similar functionality.

### Information collection

The service status information is collected in two ways: through ESB or through SOAP messages.

### ESB

If service S₁ is registered on an ESB 102 as an endpoint, the real-time information collector 103 can collect the information from the messages exchanged between the service 101 and its consumers. This is achieved by subscribing the real-time information collector 103 to the JMS queues or topics on the ESB 102. In the preferred embodiment, each monitor 201 has its designated monitored service 101. Therefore the real-time information collector 103 only collects messages of the designated monitored service 101, not other services. However, in alternative embodiments (not shown), a single real-time information collector 103 may collect messages from a plurality of designated monitored services 101. In further alternative embodiments (not shown), each real-time information collector 103 only collects messages from a single designated monitored service 101, but a plurality of real-time information collectors 103 are connected to a single information processor 105 or a single history database 106.

Examples of a request JMS message and a response JMS message are shown below:

### Example 1: Examples of request and response JMS messages.

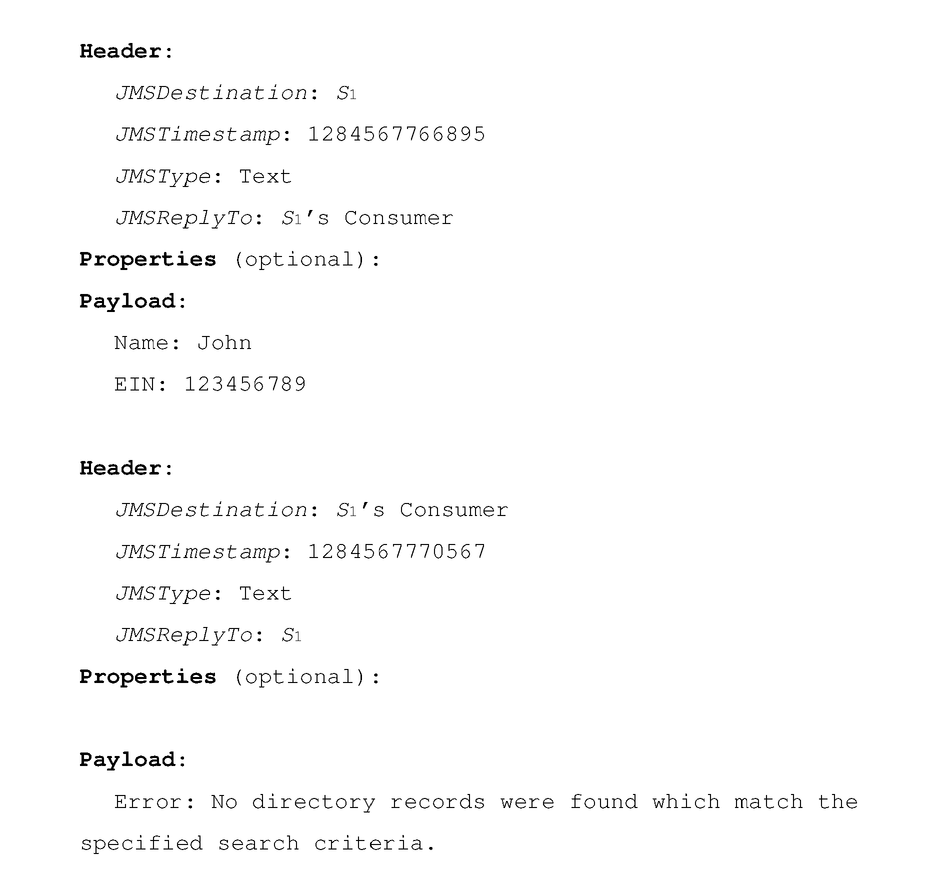

The collected messages are then passed to the information processor 105 for processing. The information processor 105 processes the messages and records related information into database 106 through the history service interface 107.

As discussed above, the JMS messages are the actual communication messages between the monitored service and its consumers, hence, the information processor 105 can extract several types of information from the messages.

For example, by using timestamp information from a request message and its response message, the response time can be obtained. In the Example 1 above, the time between the request message and the response message is 1284567770567-1284567766895 = 3672 milliseconds, which is the response speed of *S*₁ for that particular request. If response speed for each request (or a number of requests) is calculated, then an average response speed for *S*₁ can also be calculated.

The error rate can be obtained by using a predefined time window. Within the time window, e.g. a week, the number of response messages of *S*₁ that contain errors divided by the total number of response messages of *S*₁ is the error rate of *S*₁*.*

As the information processor 105 can observe the content of the communication messages, the type of errors and possible reasons can also be retrieved. In Example 1, the error message is "No directory records were found which match the specified search criteria." This error could indicate that the user has entered invalid search criteria. However, if the error message is "NullPointerException", then it could indicate that the service has internal failures. If the information processor 105 finds any abnormal information in the messages, e.g. an error message, it will also create an event record and pass it to the history service interface 107 to save into the database 106. If the error is generated by the ESB system 102, then it could indicate that the service/endpoint is no longer available.

### SOAP Messages

If service *S*₁ is not registered on an ESB as an endpoint, the real-time information collector 105 can still collect information about its status by sending mock SOAP messages to the service 101. The response SOAP messages from the monitored service are passed to the information processor 105 for processing. However, as the SOAP messages collected in this way are not the actual communication messages between the service and its consumers, only limited aspects of the service status information can be monitored, such as availability, service internal error, and response speed. An example SOAP message with error generated by a service are shown below:

### Example 2. A SOAP message example.

```
         <?xml version="1.0" ?>
         <soapenv:Envelope
               xmlns:soapenv="http://schemas.xmlsoap.org/soap/envelope/"
               xmlns:xsd="http://www.w3.org/2001/XMLSchema"
               xmlns:nsl="http://cisco.com/mwtm">
               <soapenv:Body>
                      <soapenv:Fault
                             xmlns:soapenv="http://schemas.xmlsoap.org/soap/
         envelope/">
                              <faultcode>soapenv:Server</faultcode>
                              <faultstring>UNEXPECTED ERROR</faultstring>
                              <detail>
                                     <nsl:APIStatus>
                                            <StatusCode>1000</StatusCode>
                                            <Message>UNEXPECTED_ERROR : test
         </Message>
                                     </nsl:APIStatus>
                              </detail>
                      </soapenv:Fault>
               </soapenv:Body>
         </soapenv:Envelope>
```

In a similar manner to the ESB-based monitoring described above, the information processor 105 will process the messages and record related information, such as availability, service internal error, and response speed, into database 106 through the history service interface 107.

### Information Retrieval Phase

The communicator 104 is responsible for communicating with the monitor coordinator 203 and other service monitors 201 to provide or receive service status information. When the communicator 104 is contacted by the monitor coordinator 203, it will contact the information processor 105 to get the service current status and future performance prediction information. If the monitor coordinator 203 provides a local SLA, the local SLA is also passed to the information processor 105. After the history data is retrieved from the database 106 through the history service interface 107, the information processor 105 will process it according to the supplied local SLA (if available) or the global SLA stored in storage 108 to examine whether the service is in satisfactory status. This processing is performed through a rule engine, which can reason whether the service performance satisfies the local SLA or the global SLA, and a predictive algorithm, which can predict the possible future performance of the monitored service 101 according to the historical data. The processed service status information from the information processor 105 is passed back to the communicator 104. Once the communicator 104 receives the information from the information processor, it will pass it back to the monitor coordinator 203.

### BPEL Design Phase

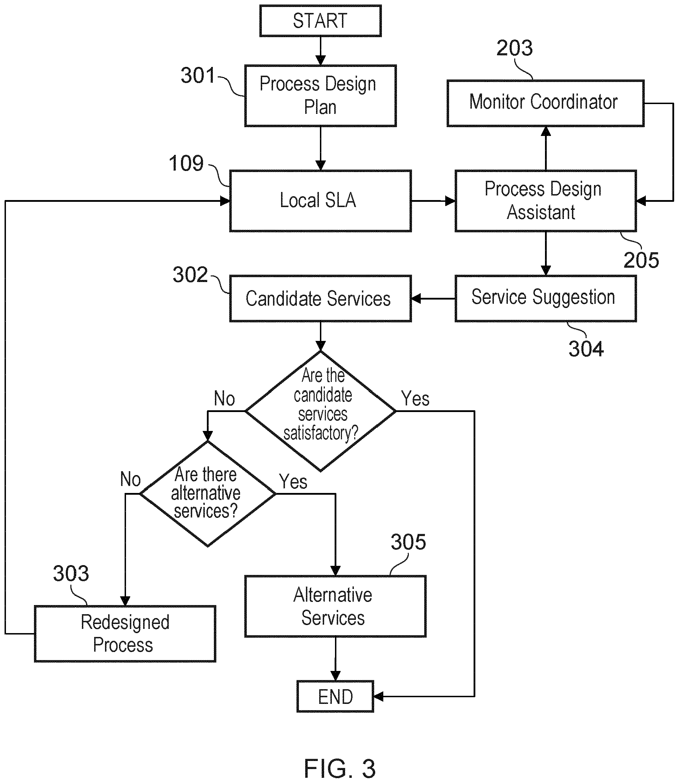

When a business process designer uses JDeveloper to design BPEL processes, the PDA plug-in 205 can help the designer to create more reliable BPEL processes, according to the method of this embodiment, which is set out in outline in Figure 3.

The BPEL designer 208 starts by drawing up a process design plan (step 301). When the BPEL designer 208 chooses, via a user interface (not shown) the directory service *S*₁ to be included into a BPEL process, the PDA 205 will prompt the designer via a display unit (not shown) to input to the PDA 205 via the user interface the KPI/SLA requirements for *S*₁*.* These make up the local SLA 109. The PDA 205 then contacts the monitor coordinator 203 in order to present to the designer via the display unit reliability suggestions about *S*₁*.* The monitor coordinator 203 will first search through the service registry 202 to see which local service monitor 201 is in charge of monitoring *S*₁ and then communicate with that local service monitor 201 to get real-time service monitoring information as well as the service future behaviour predictions based on the local service monitor's history data and the KPI/SLA input by the designer 208. If the designer does not input any KPI/SLA requirements, the default global SLA stored inside the monitor 201 will be used.

The service current status and future behaviour prediction information will then be returned to the designer 208 as a reference (step 304) to enable the designer to decide whether the selected service is the best one to be included in the BPEL process. If the selected service *S*₁ does not satisfy the designer specified SLA, then alternative services with the similar functionality are suggested (step 305), such as *S*₂*.* However, if the chosen service performance is below the required standard and there is no alternative service available, then the process designer can choose to redesign the process (step 303).

The process may then be repeated for other services chosen by the designer.

### BPEL Execution Phase

During process execution, the PEA plug-in 206 can help to reduce the chances of process failure according to the method of this embodiment which is set out in outline in Figure 4. When a BPEL execution engine 209 is executing a BPEL process 204, the PEA 206 contacts the monitor coordinator 203 to get subsequent (in terms of the process workflow) services' status information so that the BPEL engine 209 will be informed if there is any problem in the succeeding steps of the currently executed BPEL process.

For example, in a business process, the first step is to display a user interface for users to type in their name or EIN; then the next step will invoke the directory service *S*₁ to get the user details. When the process reaches the first step, the PEA 206 starts examining the status of the service in the next step, i.e. *S*₁*.* If any problem with *S*₁ has been discovered (step 401), the BPEL execution engine 209 will be informed. The BPEL execution engine 209 then can either arrange alternative services, such as *S*₂*,* to replace the problematic service (step 402) or if there is no alternative service available, an entry will be recorded in the event log 207 by the PEA 206. The event log 207 can help the business process analyst to diagnose exactly which services caused the problems.

In an exemplary embodiment, the one or more computer systems implementing the BPEL execution engine 209, the PEA 206, the monitor coordinator 203, and the monitor(s) 201 preferably perform the above steps automatically and without human intervention.

The methods and systems described in the above embodiments are preferably combined and used in conjunction with each other as shown in Figure 5.

The systems and methods of the above embodiments may be implemented in a computer system (in particular in computer hardware or in computer software) in addition to the structural components and user interactions described.

In an exemplary embodiment, each monitor 201 comprises a processor on which a program is run to perform the functions of the information processor 105 and real-time information collector 103 (although these components may be implemented by separate programs which may be run on separate processors); and communications interface which is the communicator 104; and one or more memory devices storing the above programs and the database 106 and global SLA database 108. History service interface 107 may be implemented in hardware (e.g. as a pre-programmed database driver) or in software. The processor(s) and memory device(s) which are included in the monitor may be, but need not be, the processor(s) and memory device(s) which also store and run the software that is executed to provide the relevant service.

In the exemplary embodiment, the process design assistant 205 and the process execution assistant 206 are each provided as software programs which are stored on a memory device and executed on a computer of the BPEL Designer or the system manager. These computers are connected to each of the other components shown in Figure 2 via network connections.

In the exemplary embodiment, the BPEL engine 209 is the result of a software program running on a computer which is connected to the other components shown in Figure 2 via network connections. The BPEL engine 209 executes a BPEL process 204 (which is stored in memory device) and communicates with the computer systems providing the services required for that process in order to execute the steps in that process.

In the exemplary embodiment, the monitor coordinator 203 is a software program running on a computer which is connected to the other components shown in Figure 2. The service registry 202 is preferably stored in a memory device forming part of that computer. The monitor coordinator 203 receives information from the monitors 201 over network connections and provides that information to other computers executing the process design assistant 205 and the process execution assistant 206 over network connections.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display (for example in the design of the business process). The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

In particular, although the methods of the above embodiments have been described as being implemented on the systems of the embodiments described, the methods and systems of the present invention need not be implemented in conjunction with each other, but can be implemented on alternative systems or using alternative methods respectively.

All references referred to above are hereby incorporated by reference.

## Claims

1. A method of monitoring the performance of services within a business process environment, the method including the steps of, for each of a plurality of services within said environment, locally to said service:
monitoring the performance of said service in real time; and
storing a history of events in the performance of said service.

2. A method of monitoring according to claim 1, wherein each of said plurality of services is separately monitored, preferably by monitoring the entire message traffic between said service and its consumers.

3. A method of monitoring according to claim 1 or claim 2, further including the step of, on request from a central agent, passing information as to the monitored service's current performance, historical performance, predicted future performance or any combination thereof to said central agent.

4. A method of monitoring according to claim 3, further including the steps of:
receiving from said central agent at least one criterion for the performance of the service;
analysing, using the stored history of events, whether the performance of the service meets said criterion; and
reporting the result of said step of analysing to said central agent.

5. A method of designing a business process which uses one or more services within a business process environment, the method including the steps of, when a service is chosen to be included in said business process:
specifying at least one criterion for the performance of said service;
retrieving service status information in real-time about said service, retrieving historical performance information for said service or predicting future performance characteristics of said service;
comparing said service status information, historical performance information or future performance characteristics to said criterion; and
determining, on the basis of said comparison, whether to include said service in said business process, and, optionally:
if it is determined not to include said chosen service in said business process, suggesting an alternative service to said chosen service.

6. A method of executing a business process which uses one or more services within a business process environment, the method including the steps of, for at least one of said services:
retrieving real-time service status information or predicted service performance information about a service which is scheduled to be used by the business process, in advance of the use of that service; and
determining, on the basis of said service status information, whether there are any problems or potential problems with the use of said service.

7. A method according to claim 6 wherein the method further includes the steps of, if a problem or potential problem is determined:
determining if an alternative service exists which could replace the service in which a problem or potential problem is determined; and
if an alternative service exists, adjusting said business process to use said alternative service rather than the service that was scheduled to be used by said business process.

8. A system for monitoring the performance of a service within a business process environment, the system including, locally to said service:
an information collector collecting information about the performance of said service in real-time;
a database storing information about the performance of said service over time; and
a control unit processing the information collected by said information collector and determining information to be stored in said database.

9. A system according to claim 8 wherein the system monitors the performance of a single service.

10. A system according to claim 8 or claim 9 wherein the control unit receives a request from a central agent and passes information as to the monitored service's current performance, historical performance or predicted future performance or any combination thereof to said central agent.

11. A system according to claim 10 wherein the control unit receives at least one criterion for the performance of the service, analyses, using information from said database whether the performance of the service meets said criterion and reports the results of said analysis to the central agent.

12. A system for providing a service within a business process environment, the system including:
a memory storing a program which, when executed, provides said service;
a processor on which said program is executed;
an information collector collecting information about the performance of said service in real-time;
a database storing information about the performance of said service over time; and
a control unit processing the information collected by said information collector and determining information to be stored in said database.

13. A system for monitoring the performance of a plurality of services within a business process environment, the system including:
a plurality of monitors, each monitoring the performance of one of said plurality of services in real-time;
a coordinator communicatively coupled to each of said monitors; and
a process design unit which may be invoked by a designer of a business process which uses at least one of said plurality of services, wherein:
for each service chosen to be included in said business process, the process design unit sends a request to said coordinator to determine whether said service meets at least one criterion for the performance of said service;
the coordinator determines the monitor which monitors the performance of said service and passes the criterion to said monitor;
said monitor determines whether said service meets said criterion and reports the outcome of said determination to said coordinator, which responds to said request from the process design unit.

14. A system for monitoring the performance of a plurality of services within a business process environment, the system including:
a plurality of monitors, each monitoring the performance of one of said plurality of services in real-time;
a coordinator communicatively coupled to each of said monitors; and
a process monitor monitoring the execution of a business process which uses at least one of said plurality of services, wherein:
for each service in said business process, the process monitor sends a request to said coordinator to determine whether said service meets at least one criterion for the performance of said service in advance of said business process using said service;
the coordinator determines the monitor which monitors the performance of said service and passes the criterion to said monitor; and
said monitor determines whether said service meets said criterion and reports the outcome of said determination to said coordinator, which responds to said request from the process monitor.

15. A system according to claim 14 wherein, if the response from the coordinator is negative, the process monitor determines if an alternative service to said service is available within the business process environment, and if an alternative service is available, adjusts said business process to use said alternative service rather than the service that was scheduled to be used by said business process.
